# EUROPEAN PATENT APPLICATION

(11) **EP 4 477 767 A1**
(43) Date of publication of application: **18.12.2024**
(21) Application number: 23752173.7
(22) Date of filing: 10.02.2023
(51) Int. Cl.: C21C 7/00, C21C 7/06, C22C 21/00, C21D 8/00

(54) **PREMIX CONTAINING NANOPARTICLES, USE OF A PREMIX CONTAINING A VEHICLE AND NANOPARTICLES, PROCESS FOR THE INCORPORATION OF NANOPARTICLES INTO MATRIX MATERIAL AND METAL**

(30) Priority: 11.02.2022 BR 102022002639
(71) Applicant: Instituto Hercílio Randon, 95181899 Farroupilha (BR)
(72) Inventor: BOARETTO, Joel, 95032-180 Caxias do Sul (BR); CRUZ, Robinson Carlos Dudley, 95020-472 Caxias do Sul (BR)
(74) Representative: Grünecker Patent- und Rechtsanwälte PartG mbB
(86) International application number: PCT/BR2023/050049
(87) International publication number: WO 2023/150852

(57) **Abstract**

The present invention is in the field of materials engineering and nanotechnology. More specifically, the invention discloses a premix useful for the improved dispersion of nanoparticles in various materials, including, among others, metals, transition metals, rare earths or combinations thereof. A use, an industrial process to facilitate the incorporation of nanoparticles into products of economic interest, and a metal with improved mechanical properties are also disclosed. The nanoparticles premix of the invention has peculiar composition, purity and/or particle size profile, being useful in a number of applications and for solving several technical problems, including facilitating dispersion in other substances, facilitating use in industrial processes, avoiding inadvertent dispersion of nanoparticles in the environment and the contact with humans or animals. The metal with improved mechanical properties of the present invention comprises said nanoparticles and, in a broad contrast to the prior art, has substantially increased hardness without losing ductility, and strength, yield and/or elongation points. This surprising result is counterintuitive and has great economic importance.

## Description

### Field of the Invention

The present invention is in the field of materials engineering and nanotechnology. More specifically, the invention discloses a premix useful for the improved dispersion of nanoparticles in various materials, including, among others, metals, transition metals, rare earths or combinations thereof. A use, an industrial process to facilitate the incorporation of nanoparticles into products of economic interest, and a metal with improved mechanical properties are also disclosed. The nanoparticles premix of the invention has peculiar composition, purity and/or particle size profile, being useful in a number of applications and for solving several technical problems, including facilitating dispersion in other substances, facilitating use in industrial processes, avoiding inadvertent dispersion of nanoparticles in the environment and the contact with humans or animals. The metal with improved mechanical properties of the present invention comprises said nanoparticles and, in a broad contrast to the prior art, has substantially increased hardness without losing ductility, and strength, yield and/or elongation points. This surprising result is counterintuitive and has great economic importance.

### Background of the Invention

Nanotechnology is a rapidly expanding science and has generated many expectations due to the unusual properties of nanoparticles of different materials. However, its large-scale use still faces multiple limitations, starting with the unavailability of nanoparticle preparations with high concentration, purity, and precise particle size profile. In addition, there are several other technical problems that limit the industrial use of nanoparticles, including the tendency to aggregate, the difficulty of dispersion, the risks associated with possible dispersion in the air/environment and the still little-known effects resulting from human or animal contact with nanoparticles.

Nanoparticles obtained by bottom-up processes are limited to certain chemical species that are reaction products and have low purity, not being technically and/or economically viable on large scales. These and other reasons contribute to the fact that no nanoparticles premix is yet available on an industrial scale that is stable, pure, with high concentration and/or with a particle size distribution of choice and entirely in the nanometer range. The present invention solves these problems.

After searching the prior art in scientific and patent literature, the following documents related to the topic were found:

US patent 4,084,965 discloses the production of a Niobium powder (referred to as Columbium powder) with 5.1 microns. Said powder is obtained by hydrogenation and grinding of a Niobium ingot, the grinding being assisted by the addition of a small amount of a material containing phosphorus (between 5 and 600 ppm of elemental phosphorus), preferably in liquid form to facilitate mixing. It does not disclose a nanoparticles premix as the present invention.

Brazilian patent application PI 0401882-6, filed by CBMM and archived, discloses a process for producing metallic Niobium and Tantalum powder with high chemical purity, high surface area, suitable morphology and porosity, and low apparent density. Said process comprises the steps of: obtaining fine powder; controlled surface oxidation; reduction of this oxide layer with alkali or alkaline earth metals in a bath of molten salts, or within a mixture of molten salts; dissolution and leaching of the cake formed; filtering, washing and drying of the obtained product. It does not disclose or anticipate the present invention.

Brazilian patent PI 0105773-1, granted to CBMM, discloses a process for producing Nb-Zr alloy powder, containing 0.1% to 10% of zirconium. Said process comprises hydration, grinding and dehydration of Niobium-Zirconium (Nb-Zr) alloys to produce powder with controlled impurity levels. It does not disclose a nanoparticles premix as the present invention.

Brazilian patent application PI 0402611-0, filed by IPT/SP and rejected, discloses a process for producing Niobium monoxide (NbO) powder of high purity, high specific surface area, controlled oxygen and nitrogen contents, with morphology and porosity suitable for use in the manufacture of capacitors. Said process is characterized by two reduction steps of Niobium pentoxide (Nb₂O₅), the first reduction step of Niobium pentoxide (Nb₂O₅) to Niobium dioxide (NbO₂) being conducted by a reducing gas and, the second step, which consists in obtaining Niobium monoxide (NbO) through the total or partial transfer of oxygen, referring to the transformation of NbO₂ into NbO, to a fine powder of metallic Niobium (Nb) with morphology and physical characteristics similar to the of NbO₂. It does not disclose the nanoparticles premix of the present invention.

Brazilian patent PI 0106058-9, filed by CBMM and transferred to IPT/SP, discloses a process for producing high-purity Niobium powder, with high specific surface area and controlled oxygen contents. Said process comprises a single reduction step of alkali or alkaline earth metal niobates (MeₓNbO_{y}, where Me is the alkali or alkaline earth metal, x=0.5 to 3 and y=2 to 4) with a metal of the same nature followed by an acid leaching/washing step to remove the alkali or alkaline earth metal oxides (or excess alkali or alkaline earth metal used in the reduction) present in the final product. The patent also protects the Niobium powder thus obtained. It does not disclose the nanoparticles premix of the present invention.

US patent US 6,375,704 B1, of Cabot Corp., discloses a Niobium powder preparation and a process for preparing Niobium powder flakes for use in capacitors. Said process comprises grinding Niobium chips to form flakes and then subjecting the obtained flake to a deoxidation step, preferably with magnesium. It does not disclose a nanoparticles premix as the present invention.

The problem of difficulty in mixing/dispersing/homogenizing additives, particularly those containing nanoparticles, in the processing of metals and special steels has been known for some time, and there are different approaches to try to solve it.

In this context, CN105414497 details the technical difficulties of homogenizing additives in the manufacture of special steels. Said document discloses a device developed specifically to solve this problem, and includes a pipe, a feeder with a valve welded to the side of one opening and a thin sealed and welded pipe, with its end directed towards the center of the opening of the other pipe, in order to enable the insufflation of air or argon to form negative pressure and then allow the addition of fine powders of the additive into the liquid medium of the steel (molten). The device allows the adjustment of the uniform addition of additive. It does not disclose the nanoparticles premix of the present invention.

JP3321491, entitled "*Method for adding rare earth element to molten steel and additive*", discloses a safe way to add an additive to molten steel. Said additive is prepared by filling a container with a powder of an alloy containing rare earths, copper and aluminum. The container is made of a hollow bar of carbon steel or stainless steel. The way of adding the additive consists of continuously adding the additive to the molten steel during the casting phase. It does not disclose the nanoparticles premix of the present invention.

US4892580 discloses an additive in the form of filaments containing lead for obtaining modified steels. Said additive is in the form of filaments consisting of a metallic coating and a finely divided material, which comprises metallic lead or lead alloys, in addition to a material that releases CO₂ at the temperature of the molten steel. It does not disclose the nanoparticles premix of the present invention.

RU2569621 discloses a method for producing steel containing Niobium. Said method includes a step of melting the steel and forming a 200mm thick layer in a receptacle. During the treatment of the metal outside the furnace ferroniobium is added at a rate of 0.01 to 1 kg per ton of metal. It does not disclose the nanoparticles premix of the present invention.

US 3860777 discloses a process for welding low alloy steels containing Niobium. In said document, weld deposits of improved strength and hardness are obtained, when compared to similar ones known up to date. The process involves the addition of controlled quantities of vanadium and/or titanium to the molten metal, together with other alloying elements to provide the formation of a deposit whose concentration is controlled in comparison with the concentration of present Niobium. It does not disclose the nanoparticles premix of the present invention.

WO 92226675 discloses a ferroniobium alloy and a Niobium additive for steel, cast iron and other metallic alloys. The ferroniobium alloy has a microstructure comprising a eutectic matrix (E) and a primary constituent (N) as a solid solution rich in niobium, which requires the chemical composition to be 75 to 95% of Niobium, 5 to 25% of iron, with the maximum impurities defined as follows: tantalum 0.1%, silicon 3%, aluminum 1% and tin 0.15%. This additive is useful for adding Niobium to steels, cast iron, and other materials. It does not disclose the nanoparticles premix of the present invention.

Co-pending patent application BR 102020016774-0, published on Feb 20, 2022, and PCT BR 2021/050346 (published on Feb 24, 2022, as WO 2022/036427), with inventors in common with the present invention, disclose a preparation of Niobium nanoparticles obtained by top down approach. Said preparation concomitantly includes the following technical characteristics: particles completely in the particle size range of nanometers; high purity; on an industrial scale, with an adequate cost for economic feasibility. Said nanometric powder preparation has very high purity, since the process does not add impurities or lead to the formation of reaction products, as is the case with state-of-the-art bottom-up (or synthesis) processes. It does not disclose a nanoparticles premix of the present invention.

Patent application JPH07292410A published on Nov 07, 1995, discloses a method for adding a rare earth element to a Fe-Cr-Al alloy, in which a powder of a rare earth element alloy and copper or aluminum and a carbon steel or stainless steel cladding material is added to a molten Fe-Cr-Al alloy. The process of the present invention is different from the process of JPH07292410A, in addition to the fact that patent application JPH07292410A aims at application in a Fe-Cr-Al alloy.

Patent application WO2012/104306 published on Aug 09, 2012, discloses a process for producing steel strengthened with the addition of other metals, citing the addition of a series of components in the molten alloy, such as Mn, P, rare earths, among others. The materials and process of the present invention are different from those disclosed in WO2012/104306.

From what can be inferred from the researched literature, no documents were found anticipating or suggesting the teachings of the present invention.

### Summary of the Invention

The present invention solves several problems of the prior art and provides a premix containing nanoparticles of defined particle size profile and/or chemically defined composition. The premix of the invention is useful for the improved dispersion of nanoparticles in various materials of economic interest.

One of the objects of the invention is to provide a premix containing nanoparticles of metals, transition metals, rare earths, oxides thereof, or combinations thereof, said premix comprising a high concentration of nanoparticles in the particle size range of nanometers.

In one embodiment, said premix comprises a carrier; and nanoparticles in the particle size range of nanometers.

In one embodiment, the premix of the invention comprises nanoparticles with d₅₀ to d₉₉ in the particle size range of nanometers. In one embodiment, the premix of the invention comprises nanoparticles with d₉₀ to d₉₉ in the particle size range of nanometers.

In one embodiment, the premix of the invention comprises Niobium nanoparticles with high purity and concentration.

In one embodiment, the premix of the invention comprises a carrier selected from a capsule, sheet, container or composite composed of metallic, ceramic, vitreous material, hydrocarbons, fatty acids, waxes, processing additives, polymeric material, composite material, or combinations thereof. Said carrier is particularly useful to facilitate industrial use in processes for preparing metals, reinforced/functionalized metals, metallic alloys, ceramics, glasses, polymers, composites, or combinations thereof.

One of the objects of the invention is to provide the use of a premix containing nanoparticles of metals, transition metals, rare earths, oxides thereof, or combinations thereof for preparing materials with improved properties. Said materials are selected from metals, metallic alloys, ceramics, glasses, polymers, composites, or combinations thereof.

In one embodiment, the use of a premix containing niobium nanoparticles for preparing improved steel is provided.

In one embodiment, the use of a premix containing niobium nanoparticles for preparing improved aluminum is provided.

It is one of the objects of the invention to provide an industrial process for the preparation of materials with improved properties. Said process provides improved dispersion of nanoparticles in the material of interest, greater safety in the industrial process and ease of use on a large scale. The process comprises at least one step of adding the premix of the invention to said material.

In one embodiment, said process provides for the incorporation of nanoparticles into matrix material and comprises:
- a step of administering the premix as defined above to a matrix material;
- at least one subsequent dispersion and/or *in situ* reaction step between the components of said premix and said matrix material;
wherein said matrix material is selected from metals, reinforced/functionalized metals, metallic alloys, ceramics, glasses, polymers, composites, or combinations thereof.

In one embodiment, the process of the invention comprises a step of adding the premix to liquid phases of metals or metallic alloys, providing rapid and effective dispersion and modulation/improvement of mechanical properties.

In one embodiment, the process of the invention provides an *in situ* reaction of the premix in the metallic material, providing the obtaining of improved metals or metallic alloys.

One of the objects of the invention is to provide a metal with improved mechanical properties. The metal of the present invention comprises said nanoparticles and, in a broad contrast to the prior art, has substantially increased hardness without losing ductility, and strength, yield and/or elongation points, said properties, together, are completely counterintuitive and have a great economic importance.

In one embodiment, said metal is improved steel.

In one embodiment, said metal is improved aluminum.

These and other objects of the invention will be readily appreciated by those skilled in the art and will be described in detail below.

### Brief Description of the Figures

The following figures are presented:

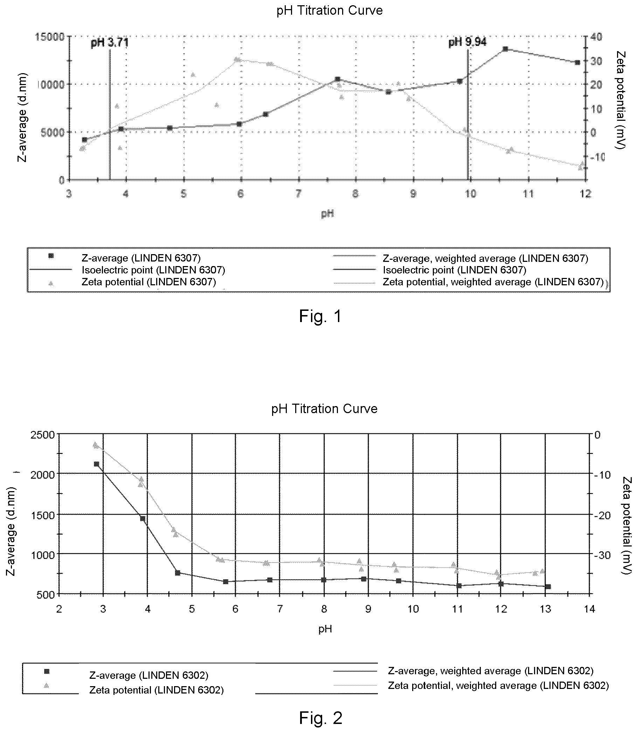

Fig. 1 depicts the zeta potential of aluminum particles as a function of the pH value. The zeta potential modulus (mV) is an indication of particles stability. The greater the zeta potential modulus, the more stable the particles are.
Fig. 2 depicts the zeta potential of Niobium Pentoxide particles as a function of the pH value.

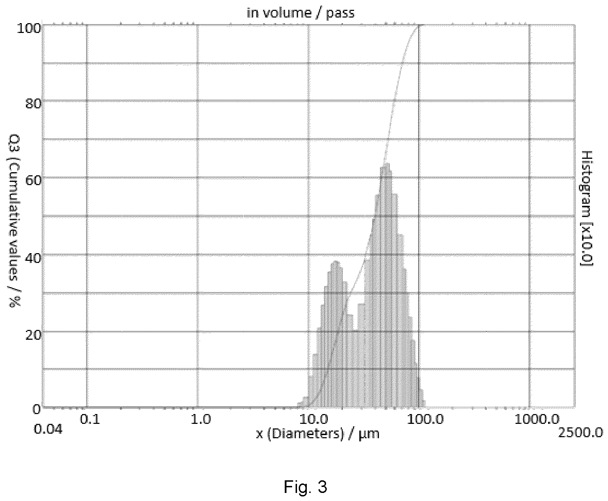

Fig. 3 depicts the particle size results for aluminum particles using the Cilas equipment.

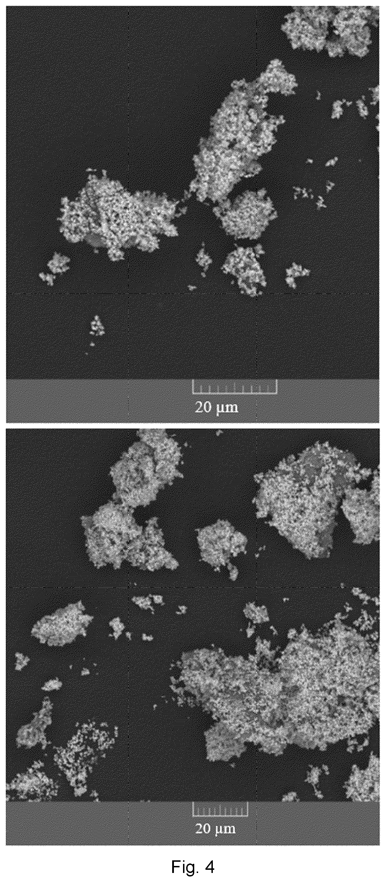

Fig. 4 depicts a SEM (scanning electron microscopy) result for the metallic mixture after 5h of mixing, with a magnification of 3.11 kx and 2.01 kx at 10.0 kV.

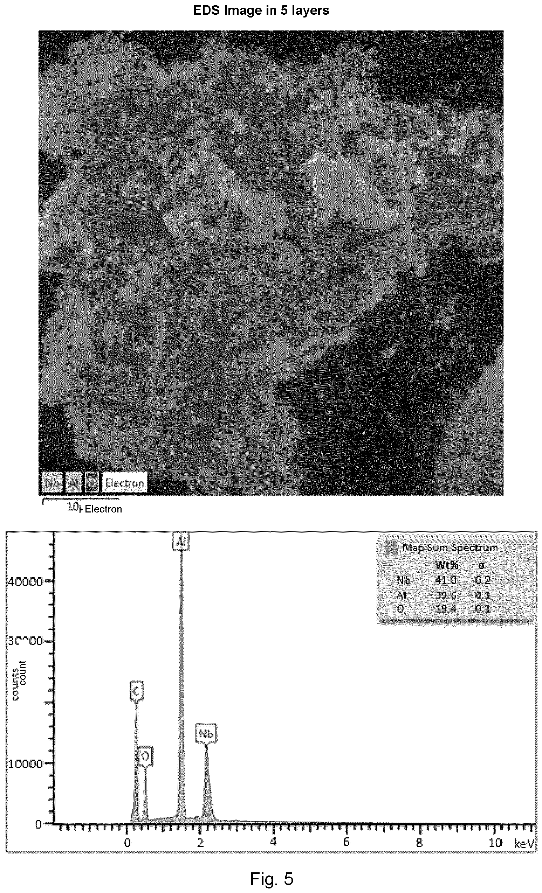

Fig. 5 depicts the EDS (Energy Dispersive Spectroscopy) result for the metallic mixture after 5h of mixing. The EDS shows the proportion of each element in the metallic mixture.

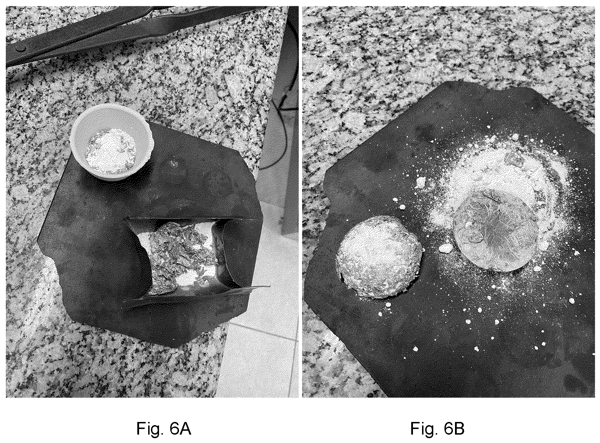

Fig. 6A shows the result of chopped aluminum, which did not melt.
Fig. 6B shows the cast aluminum billet, which was tested based on the results showed in Fig. 6A.

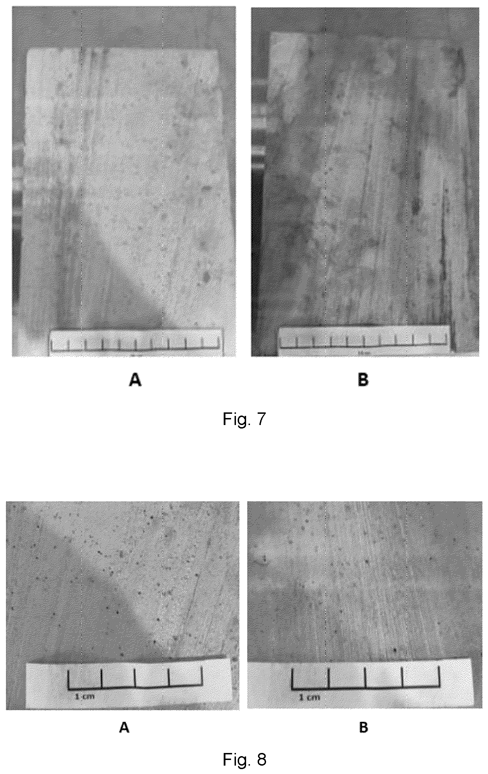

Fig. 7 shows an embodiment of the invention wherein aluminum ingots were obtained by melting the SAE 305 alloy, cut in the central region along the length and without metallographic preparation. In A) a photo of the aluminum ingot without the addition of premix is depicted; in B) a photo of the ingot with the addition of premix containing Nb₂O₅ is depicted.
Fig. 8 shows an embodiment of the invention wherein aluminum ingots were obtained by melting the SAE 305 alloy, cut along the length, with and without the addition of premix containing Niobium pentoxide nanoparticles. In A) a photo of the aluminum ingot without the addition of premix is depicted, showing pores; in B) a photo of the aluminum ingot with the addition of premix is depicted, showing pores.

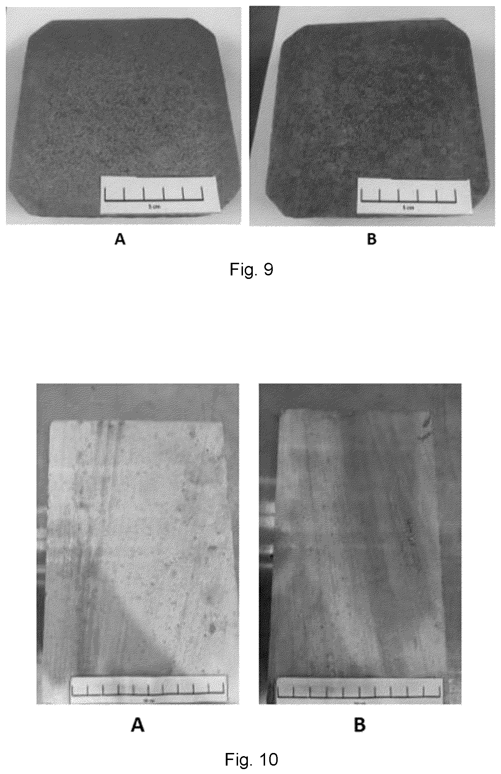

Fig. 9 shows photos of the section appearance in the base region of the aluminum ingots after the metallographic attack. In A) the aluminum ingot is depicted without the addition of premix; in B) the aluminum ingot is depicted with the addition of premix containing Niobium pentoxide.
Fig. 10 shows an embodiment of the invention wherein aluminum ingots were obtained by melting the SAE 305 alloy, cut in the central region along the length and without metallographic preparation. In A) a photo of the aluminum ingot without the addition of premix is depicted; in B) a photo of the ingot with the addition of premix containing FeNb is depicted.

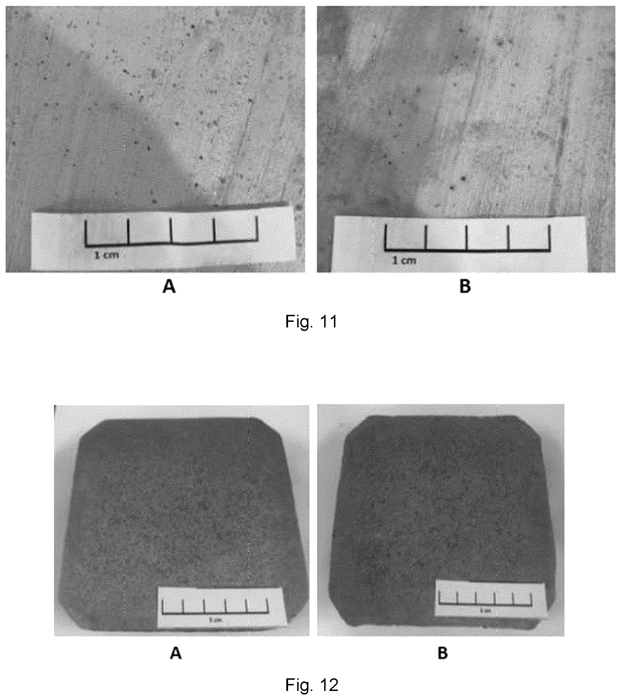

Fig. 11 shows an embodiment of the invention wherein aluminum ingots were obtained by melting the SAE 305 alloy, cut along the length, with and without the addition of premix containing Ferroniobium nanoparticles. In A) a photo of the aluminum ingot without the addition of premix is depicted, showing pores; in B) a photo of the aluminum ingot with the addition of premix is depicted, showing pores.
Fig. 12 shows photos of the section appearance in the base region of the aluminum ingots after the metallographic attack. In A) the aluminum ingot is depicted without the addition of premix; in B) the aluminum ingot is depicted with the addition of premix containing Ferroniobium.

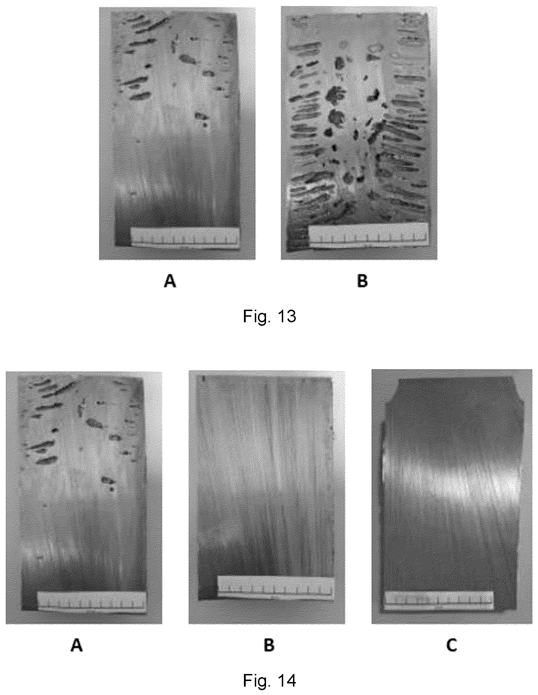

Fig. 13 shows the appearance of the central region sectioned along the length of steel ingots obtained by melting ASTM A36 steel without metallographic preparation. In A) the reference ingot, free of premix, is depicted; in B) the ingot to which a premix containing Nb₂O₅ nanoparticles was added while melting the filler, is depicted.
Fig. 14 shows the appearance of the central region sectioned along the length of the steel ingots without metallographic preparation. In A) the reference ingot, free of premix, is depicted; in B) the ingot to which a premix containing 10 g of Nb₂O₅ nanoparticles was added after melting the filler, is depicted; in C) the ingot to which a premix in the form of 18.6 g of aluminum foil containing 10 g of Nb₂O₅ nanoparticles was added after melting the filler, is depicted.

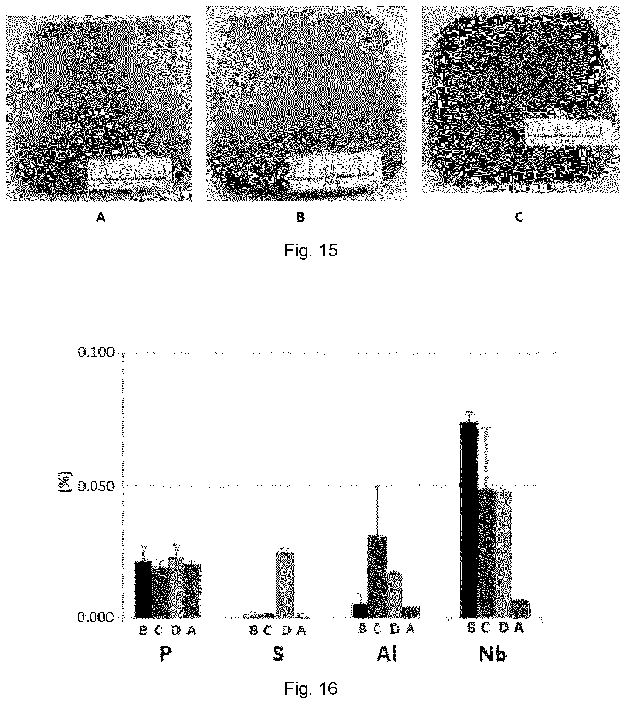

Fig. 15 shows photos of base sections of the steel ingots after metallographic attack in order to evaluate the gross melting structure. In A) the base section of the reference ingot, without the addition of premix, is depicted; in B) the base section of the ingot to which a premix containing 10 g of Nb₂O₅ nanoparticles was added after melting the filler, is depicted; in C) the base section of the ingot to which a premix in the form of 18.6 g of aluminum foil containing 10 g of Nb₂O₅ nanoparticles was added after melting the filler, is depicted.
Fig. 16 shows a graph indicating on the ordinates the % level of the elements P (Phosphorus), S (Sulfur), Al (Aluminum) and Nb (Niobium) in four steel ingots. A) represents the reference steel ingot, without the addition of premix; B) represents the steel ingot to which a premix containing 10 g of Nb₂O₅ nanoparticles was added while melting the filler; C) represents the steel ingot to which a premix containing 10 g of Nb₂O₅ nanoparticles was added after melting the filler; D) represents the steel ingot to which a premix in the form of 18.6 g of aluminum foil containing 10 g of Nb₂O₅ nanoparticles was added after melting the filler.

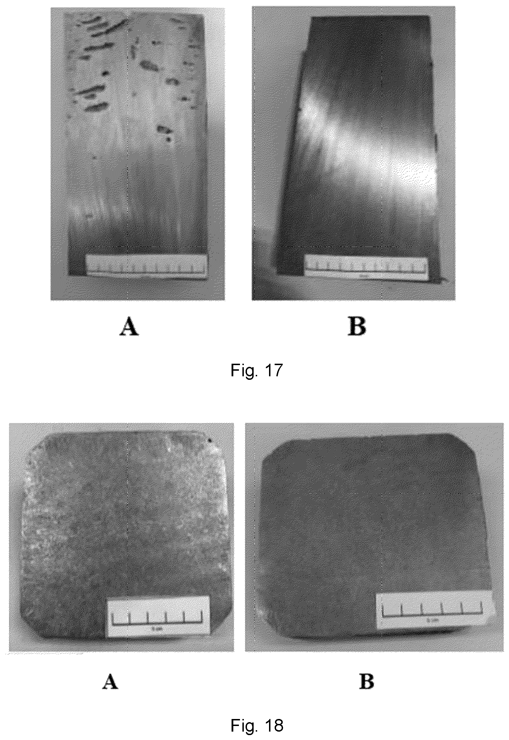

Fig. 17 shows the appearance of the central region sectioned along the length of steel ingots without metallographic preparation. In A) the reference ingot, free of premix, is depicted; in B) the ingot to which a premix containing 10 g of FeNb nanoparticles was added after melting the filler, is depicted.
Fig. 18 shows photos of base sections of steel ingots after metallographic attack in order to evaluate the gross melting structure. In A) the base section of the reference ingot, without the addition of premix, is depicted; in B) the base section of the ingot to which a premix containing 10 g of FeNb nanoparticles was added after melting the filler, is depicted.

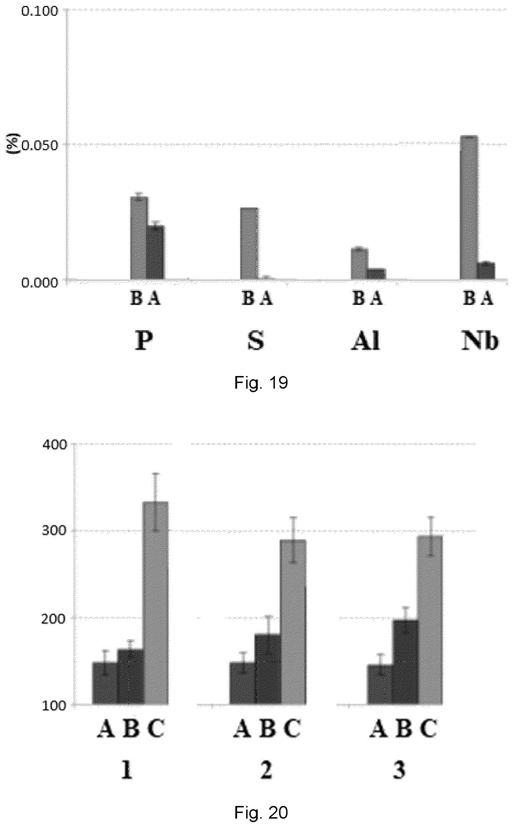

Fig. 19 shows a graph indicating on the ordinates the % level of the elements P (Phosphorus), S (Sulfur), Al (Aluminum) and Nb (Niobium) in two steel ingots. A) represents the reference steel ingot, without the addition of premix; B) represents the steel ingot to which a premix containing 10 g of FeNb nanoparticles was added after melting the filler.
Fig. 20 shows the hardness results on the Vickers scale (HV1 kgf) on the ordinates, for the base (1), center (2), and top (3) sections of steel ingots, wherein A) is the reference ingot, without the addition of premix; B) is the ingot to which a premix containing 10 g of Nb₂O₅ nanoparticles was added after melting the filler; C) is the ingot to which a premix in the form of 18.6 g of aluminum foil containing 10 g of Nb₂O₅ nanoparticles was added after melting the filler.

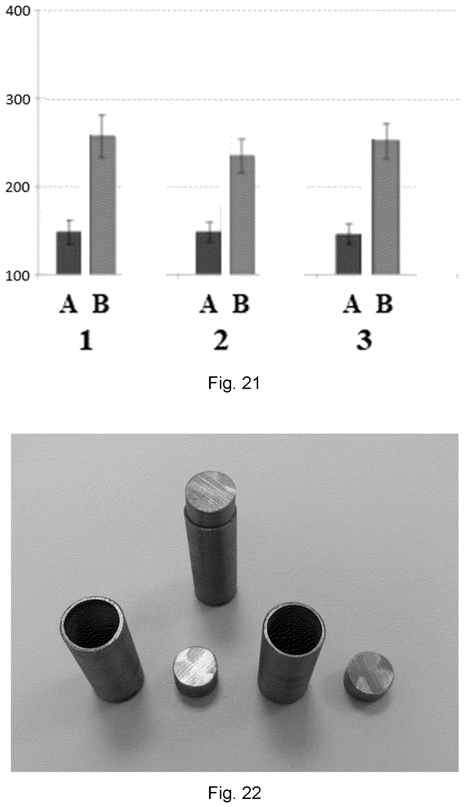

Fig. 21 shows the hardness results on the Vickers scale (HV1 kgf) on the ordinates, for the base (1), center (2), and top (3) sections of steel ingots, wherein A) is the reference ingot, without the addition of premix; B) is the ingot to which a premix containing 10 g of FeNb nanoparticles was added after melting the filler.
Fig. 22 is a photo of metal capsules to contain nanoparticles and serve as a premix for the manufacture of molten metals.

### Detailed Description of the Invention

In one object, the present invention discloses a premix comprising a carrier; and nanoparticles in the particle size range of nanometers; wherein said nanoparticles are composed of metals, transition metals, rare earths, oxides thereof, or combinations thereof.

In one embodiment, the premix of the invention comprises nanoparticles with d₁₀ to d₉₉ in the particle size range of nanometers. In one embodiment, the premix of the invention comprises nanoparticles with d₉₀ to d₉₉ in the particle size range of nanometers.

In one embodiment, said nanoparticles have a particle size distribution d₁₀ from 0.16 µm to 2.29 µm, d₅₀ from 0.35 µm to 5.62 µm, and d₉₀ from 0.78 µm to 9.94 µm.

In one embodiment, the premix of the invention comprises Niobium nanoparticles with high purity and concentration. In one embodiment, said nanoparticles are composed of Niobium oxide, Ferroniobium, or combinations thereof.

In one embodiment, said Niobium oxide is Niobium pentoxide (Nb₂O₅), Niobium dioxide (NbO₂), Niobium oxide (NbO), or combinations thereof.

In one embodiment, the premix comprises Niobium pentoxide nanoparticles. In one embodiment, the premix comprises Ferroniobium nanoparticles.

In one embodiment, the premix of the invention comprises at least one carrier selected from a capsule, sheet, container or composite composed of metallic, ceramic, vitreous material, hydrocarbons, fatty acids, waxes, processing additives, polymeric material, composite material, or combinations thereof. Said carrier is particularly useful to facilitate industrial use in processes for preparing metals, reinforced/functionalized metals, metallic alloys, ceramics, glasses, polymers, composites, or combinations thereof.

In one embodiment, said carrier is selected from a capsule, sheet, container or composite composed of metallic, ceramic, vitreous material, hydrocarbons, fatty acids, waxes, processing additives, polymeric material, composite material, or combinations thereof.

In one embodiment, said metallic carrier material is aluminum or copper; said hydrocarbon is paraffin; said fatty acids are oleic acid, palmitic acid, or erucic acid; said wax is beeswax or carnauba wax; said processing additive is sodium stearate or zinc stearate; said polymeric material is a thermoplastic polymer. In one embodiment, said thermoplastic polymer is polypropylene (PP).

In one embodiment, said carrier is selected from substances that provide greater handling safety, such as: hydrocarbons, such as paraffin; said fatty acids, such as oleic acid, palmitic acid or erucic acid; said wax, such as beeswax or carnauba wax; said processing additive, such as sodium stearate or zinc stearate; said polymeric material, such as a thermoplastic polymer, such as polypropylene (PP).

In one embodiment, the premix of the present invention has a mass ratio of nanoparticles and carrier in the range of 99:1 to 50:50, more preferably in the range of 95:5 to 55:45, more preferably in the range of 93:7 to 60:40, more preferably in the range of 92:8 to 65:35; more preferably in the range of 91:9 to 69:31, even more preferably in the range of 90.8:9.2 to 69.4:30.6.

The premix of the invention provides improved homogenization and dispersion of nanoparticles in products into which it is incorporated, including, but not limited to, molten metals.

In one embodiment, the premix of the invention is a material comprising a high quantity/concentration of nanoparticles, being particularly useful to facilitate industrial use in processes for preparing metals, reinforced/functionalized metals, metallic alloys, ceramics, glasses, polymers, composites, or combinations thereof.

One of the objects of the invention is to provide the use of a premix containing nanoparticles of metals, transition metals, rare earths, oxides thereof, or combinations thereof for preparing materials with improved properties. Said materials are selected from metals, metallic alloys, ceramics, glasses, polymers, composites, or combinations thereof.

In one embodiment, the use of a premix containing niobium nanoparticles for preparing improved steel is provided.

In one embodiment, the use of a premix containing niobium nanoparticles for preparing improved aluminum is provided.

In one embodiment, the use of the premix of the invention also provides for the *in situ* reaction of the premix constituents with the liquid metal in processes for producing metallic materials.

One of the objects of the invention is to provide a metal with improved mechanical properties. The metal of the present invention comprises said nanoparticles and, in a broad contrast to the prior art, has substantially increased hardness without losing ductility, and strength, yield and/or elongation points, said properties, together, are completely counterintuitive and have a great economic importance.

In one embodiment, said metal is improved steel.

In one embodiment, said metal is improved aluminum.

In one embodiment, said metal is free of or has a reduced amount of shrinkages and solidification voids.

In one embodiment, said metal has a more refined and homogeneous structure.

In one embodiment, said metal has a modified chemical profile.

In one embodiment, said metal has increased hardness without significantly impairing other mechanical properties (strength and yield points) and ductility.

It is one of the objects of the invention to provide an industrial process comprising the use of a premix containing nanoparticles with improved characteristics, said process providing greater ease of dispersion of nanoparticles in the substance or product of interest, greater safety in the industrial process and ease of use on a large scale.

In another object, the present invention discloses a process for incorporating nanoparticles into matrix material comprising:
- a step of administering the premix as defined above to a matrix material;
- at least one subsequent dispersion and/or *in situ* reaction step between the components of said premix and said matrix material;
wherein said matrix material is selected from metals, reinforced/functionalized metals, metallic alloys, ceramics, glasses, polymers, composites, or combinations thereof.

In one embodiment, said matrix material is selected from metals, reinforced/functionalized metals, metallic alloys, or combinations thereof.

In one embodiment, the step of administering the premix is carried out in molten phases of said metal, reinforced/functionalized metal or metallic alloy.

In a non-limiting embodiment, when said metal, reinforced/functionalized metal or metallic alloy comprises steel, the premix carrier is aluminum. In an additional non-limiting embodiment, when said metal, reinforced/functionalized metal or metallic alloy comprises aluminum, the premix carrier is copper.

In one embodiment, the process of the invention comprises a step of adding the premix to liquid phases of metals or metallic alloys, providing fast and effective dispersion and modulation or improvement of mechanical properties.

The surprising increase in hardness without decreasing ductility and other mechanical properties is a remarkable technical effect of the invention.

The invention is also defined by the following clauses.

Premix containing nanoparticles, comprising: a carrier; and nanoparticles in the particle size range of nanometers, wherein said nanoparticles are composed of metals, transition metals, rare earths, oxides thereof, or combinations thereof.

The premix as defined above, wherein the mass ratio of nanoparticles and carrier is in the range of 99:1 to 50:50.

The premix as defined above, wherein said nanoparticles have a particle size distribution d₁₀ from 0.16 µm to 2.29 µm, d₅₀ from 0.35 µm to 5.62 µm, and d₉₀ from 0.78 µm to 9.94 µm.

The premix as defined above, wherein said nanoparticles are of Niobium oxide, Ferroniobium, or combinations thereof.

The premix as defined above wherein said Niobium oxide is Niobium pentoxide (Nb₂O₅), Niobium dioxide (NbO₂), Niobium oxide (NbO), or combinations thereof.

The premix as defined above, wherein said carrier is selected from a capsule, sheet, container or composite composed of metallic, ceramic, vitreous material, hydrocarbons, fatty acids, waxes, processing additives, polymeric material, composite material, or combinations thereof.

The premix as defined above, wherein:
- said metallic material is aluminum or copper;
- said hydrocarbon is paraffin;
- said fatty acids are oleic acid, palmitic acid, erucic acid;
- said wax is beeswax or carnauba wax;
- said processing additive is sodium stearate or zinc stearate; and/or
- said polymeric material is thermoplastic polymer.

Use of a premix containing nanoparticles of metals, transition metals, rare earths, oxides thereof, or combinations thereof for preparing materials with improved mechanical properties.

Use as defined above, wherein said materials are selected from: metals, metallic alloys, ceramics, glasses, polymers, composites, or combinations thereof.

Use as defined above, wherein said premix contains niobium nanoparticles and said material with improved mechanical properties is steel.

Use as defined above, wherein said premix contains niobium nanoparticles and said material with improved mechanical properties is aluminum.

Process for incorporating nanoparticles into matrix material comprising: a step of administering the premix as defined above to a matrix material; and at least one subsequent *in situ* dispersion and/or reaction step between the components of said premix and said matrix material, wherein said matrix material is selected from metals, reinforced/functionalized metals, metallic alloys, ceramics, glasses, polymers, composites, or combinations thereof.

Process as defined above, wherein said matrix material is selected from metals, reinforced/functionalized metals, metallic alloys, or combinations thereof.

Process as defined above, wherein the step of administering the premix is carried out in molten phases of said metal, reinforced/functionalized metal or metallic alloy.

Process as defined above, wherein said metal, reinforced/functionalized metal or metallic alloy comprises steel or aluminum.

Metal with improved mechanical properties, comprising nanoparticles of metals, transition metals, rare earths, oxides thereof, or combinations thereof.

Metal as defined above, wherein said metal is steel or aluminum.

Metal as defined above, wherein: said steel has an increase in hardness of at least 20% when compared to reference steel; or said aluminum has an increase in hardness of at least 5% when compared to reference aluminum, wherein said improved metal has the same ductility, and strength, yield and/or elongation points, when compared to the corresponding conventional metal.

Metal as defined above, wherein: said steel has an increase in hardness from at least 22.1% to 107.2% when compared to reference steel; or said aluminum has an increase in hardness from at least 5.1% to 6.1% when compared to reference aluminum, wherein said improved metal has the same ductility, and strength, yield and/or elongation points, when compared to the corresponding conventional metal.

Metal as defined above, wherein: said steel and/or aluminum has a Vickers hardness of up to 380 HV in 1 kgf; wherein said improved metal has the same ductility, and strength, yield and/or elongation points, when compared to the corresponding conventional metal.

Metal as defined above, wherein: said improved steel and/or aluminum has a Vickers hardness from 120 to 380 HV in 1 kgf, wherein said improved metal has the same ductility, and strength, yield and/or elongation points, when compared to the corresponding conventional metal.

Metal as defined above, free of or having a reduced amount of shrinkages and solidification voids; and/or having a refined and homogeneous structure; and/or having a modified chemical profile.

### Examples

The examples shown here are intended only to exemplify some of the various ways of carrying out the invention, however without limiting the scope thereof.

### Example 1 - Premix comprising Niobium Pentoxide Nanoparticles and its incorporation into Steel. Preparation of Al/Nb₂O₅ composite inoculant

For steel incorporation, the following materials were used:
- Aluminum foil sheets (80 g); and
- Blender;
- Attritor Mill with zirconia spheres (d = 200-300 µm, m = 800 g).

The following procedure was performed:
80 g of aluminum foil sheets were ground in a blender. The ground leaves (40 g) were subjected to grinding in an Attritor mill at 350 RPM with the aid of zirconia spheres (d = 200-300 µm, m = 800 g) in ethanol medium for 22h.

The wet metallic mixture was separated using a sieve with an opening of 500 µm. An aliquot of the wet metallic mixture was taken below 500 µm to determine the zeta potential and the particle size.

An aliquot of the wet metallic mixture was also taken below 500 µm to determine the particle size in a Cilas equipment.

The wet metallic mixture was dried in an oven at 80°C to obtain the dry powder.

For a Nb₂O₅ suspension, the pH was adjusted to 6 (experimentally measured solids content: 26% m., volume: 440 mL) using aqueous ammonium hydroxide solution (pH 14).

The niobium pentoxide nanoparticles used in the premix preparation have a particle size distribution of d₁₀ = 0.16 µm, d₅₀ = 0.35 µm, d₉₀ = 0.78 µm.

Said Nb₂O₅ suspension was mechanically stirred at 300 RPM and 23 g of aluminum powder was gradually added to it. After the addition of the aluminum powder, stirring was maintained at 300 RPM for 5 h under pH monitoring.

An increase in pH value was observed after mixing for 5 h. The pH of the final mixture remained at ~7.1.

After 2, 3, 4 and 5 h of mechanical stirring, aliquots were removed from the mother suspension and dried in a vacuum oven at 80°C to observe the state of intimate mixing between the Al and Nb₂O₅ particles in the composite inoculant.

Table 1 below describes the mass ratio of Nb₂O₅ nanoparticles and carrier (in this non-limiting example, being Al):

**Table 1 - Mass proportion of nanoparticles and carrier**

| | Nb₂O₅ (g) | Al Foil (g) | [Al/Nb₂O₅] (molar) |
|---|---|---|---|
| Quantities | 50 | 5.08 | 1.00 |
| | 50 | 10.15 | 2.00 |
| | 50 | 16.92 | 3.33 |
| | 50 | 18.61 | 3.67 |
| | 50 | 20.30 | 4.00 |
| | 50 | 21.99 | 4.33 |

In view of the experiments performed, the preferred mass ratio of nanoparticles:carrier was 90.8:9.2 to 69.4:30.6.

### Example 2 - Premix characterization

An embodiment of the premix prepared as described in Example 5 was characterized. To this end, the wet metallic mixture was separated using a sieve with an opening of 500 µm. An aliquot of the wet metallic mixture was taken below 500 µm to determine the zeta potential and the particle size.

Fig. 1 depicts the zeta potential of aluminum particles as a function of the pH value. The zeta potential modulus (mV) is an indication of particles stability. The greater the zeta potential modulus, the more stable the particles are.

Fig. 2 depicts the zeta potential of Niobium Pentoxide particles as a function of the pH value.

In view of the results of zeta potential as a function of the pH value, the pH value of the metallic mixture was adjusted to 6 at the beginning of the procedure.

As also mentioned in Example 5, an aliquot of the wet metallic mixture was also taken below 500 µm to determine the particle size in a Cilas equipment.

Fig. 3 depicts the particle size results for aluminum particles using the Cilas equipment.

The results of the particle size test carried out on the Cilas equipment can be seen in Table 2 below:

**Table 2 - Particle Size Data**

| **% of particles distribution** | **Size (equivalent diameter)** |
|---|---|
| D10% | 14.92 µm |
| D50% | 39.77 µm |
| D90% | 70.44 µm |
| Mean D | 40.94 µm |

Fig. 4 depicts a SEM (scanning electron microscopy) result for the metallic mixture after 5h of mixing, with a magnification of 3.11 kx and 2.01 kx at 10.0 kV.

Fig. 5 depicts the EDS (Energy Dispersive Spectroscopy) result for the metallic mixture after 5h of mixing. The EDS shows the proportion of each element in the metallic mixture.

### Example 3 - Comparative test with melting of chopped aluminum sheets in a crucible

As a mixing test, the fusion (900°C) of chopped aluminum with nanoparticles was carried out in a ZAS and metal crucible. As it can be seen in Figure 6, the chopped aluminum did not melt. In view of this result, and in order to evaluate the furnace temperature, melting of an aluminum billet was tested in the presence of nanoparticles. This, in turn, melted. Neither route was considered promising since there was no adequate dispersion/incorporation of the nanoparticles into the aluminum.

Fig. 6A shows the result of chopped aluminum, which did not melt.

Fig. 6B shows the cast aluminum billet, which was tested based on the results showed in Fig. 6A.

### Example 4 - Premix comprising Niobium Pentoxide Nanoparticles and its incorporation into Aluminum.

When preparing metal or alloy ingots after melting, shrinkages and/or solidification voids frequently occur. This example shows that this problem has been solved.

20-kg aluminum ingots were obtained by melting SAE 305 alloy, with or without the addition of 20 g of a premix comprising Niobium pentoxide nanoparticles, with particle size distribution d₁₀ = 0.16 µm, d₅₀ = 0.35 µm, d₉₀ = 0.78 µm.

Fig. 7 shows photos of ingots so prepared, cut along the length and without metallographic preparation. In A) the aluminum ingot without the addition of premix is depicted; in B) the ingot with the addition of premix containing Nb₂O₅ is depicted. Fig. 7 shows that a structure was obtained without shrinkages and/or solidification voids, thus indicating good distribution of niobium nanoparticles.

Fig. 8 shows photos of the aluminum ingots with and without the addition of premix containing Niobium pentoxide nanoparticles. In A) the aluminum ingot without the addition of premix is depicted, showing pores; in B) the aluminum ingot with the addition of premix is depicted, showing pores. No differences were detected between the samples, thus indicating that the addition of the premix did not influence, under these conditions, the formation of pores, that is, the formation of pores seems inherent to the process used to obtain the ingots.

The macro and microstructural aspect of the ingots was also analyzed. Regarding the macrostructure observed at the base of the ingots, no significant differences were detected. The microstructural aspect of the three regions of each ingot (base, center, and top), along the length of the ingots, under the condition without metallographic attack, did not reveal significant differences both at 50x and 200x magnification, and can be described as a matrix with distributed cuboidal and acicular constituents.

Fig. 9 shows photos of the section appearance in the base region of the aluminum ingots after the metallographic attack. In A) the aluminum ingot is depicted without the addition of premix; in B) the aluminum ingot is depicted with the addition of premix containing Niobium pentoxide.

### Example 5 - Premix comprising Ferroniobium Nanoparticles and its incorporation into Aluminum.

In this example, 20-kg aluminum ingots were obtained by melting SAE 305 alloy, with or without the addition of 20 g of a premix comprising Ferroniobium-Tantalum nanoparticles, with particle size distribution d₁₀ = 2.29 µm, d₅₀ = 5.62 µm, d₉₀ = 9.94 µm.

Fig. 10 shows photos of ingots so prepared, cut along the length and without metallographic preparation. In A) the aluminum ingot without the addition of premix is depicted; in B) the ingot with the addition of premix containing FeNb is depicted. Fig. 4 depicts ingots without shrinkages and/or solidification voids, thus indicating good distribution of Niobium nanoparticles.

Fig. 11 shows photos of the aluminum ingots with and without the addition of premix containing Ferroniobium nanoparticles. In A) the aluminum ingot without the addition of premix is depicted, showing pores; in B) the aluminum ingot with the addition of premix is depicted, showing pores. No differences were detected between the samples, thus indicating that the addition of this premix embodiment did not influence, under these conditions, the formation of pores, that is, the formation of pores is apparently inherent to the process used to obtain the ingots.

The macro and microstructural aspect of the ingots was also analyzed. Regarding the macrostructure observed at the base of the ingots, no significant differences were detected. The microstructural aspect of the three regions of each ingot (base, center, and top), along the length of the ingots, under the condition without metallographic attack, did not reveal significant differences both at 50x and 200x magnification, and can be described as a matrix with distributed cuboidal and acicular constituents.

Fig. 12 shows photos of the section appearance in the base region of the aluminum ingots after the metallographic attack. In A) the aluminum ingot is depicted without the addition of premix; in B) the aluminum ingot is depicted with the addition of premix containing Ferroniobium.

### Example 6 - Premix comprising Niobium Pentoxide Nanoparticles and its incorporation into Steel.

This embodiment of the invention highlights some of the technical effects related to the use of the premix of the invention in order to: (i) prepare steel ingots with improved properties, thus avoiding the formation of shrinkages and large pores; (ii) prepare steel ingots with a more refined and homogeneous structure; and (iii) prepare steel ingots with a modified chemical profile.

In this embodiment, steel ingots were prepared by melting ASTM A36 steel, with or without the incorporation of the premix containing nanoparticles.

In the present example, 50-kg steel ingots were obtained by melting ASTM 36 steel, with or without the addition of a premix comprising 50 g of Niobium pentoxide nanoparticles, with particle size distribution d₁₀ = 0.16 µm, d₅₀ = 0.35 µm, d₉₀ = 0.78 µm.

Fig. 13 shows the appearance of the central region sectioned along the length of the ingots without metallographic preparation. In A) the reference ingot, free of premix, is depicted; in B) the ingot to which a premix containing Nb₂O₅ nanoparticles was added while melting the filler, is depicted. Pores and voids were observed in both cases, those being more intense in the ingot to which the premix was added while melting the filler, with voids or pores at the base and along the entire length of the ingots.

Fig. 14 shows the appearance of the central region sectioned along the length of the ingots without metallographic preparation. In A) the reference ingot, free of premix, is depicted; in B) the ingot to which a premix containing 10 g of Nb₂O₅ nanoparticles was added after melting the filler, is depicted; in C) the ingot to which a premix in the form of 18.6 g of aluminum foil containing 10 g of Nb₂O₅ nanoparticles was added after melting the filler, is depicted. This time, pores and voids were observed only in the reference ingot without the addition of premix. The ingots to which the premix was added did not exhibit voids or pores at any point of the ingots.

Fig. 15 shows photos of base sections of the ingots after metallographic attack in order to evaluate the gross melting structure. In A) the base section of the reference ingot, without the addition of premix, is depicted; in B) the base section of the ingot to which a premix containing 10 g of Nb₂O₅ nanoparticles was added after melting the filler, is depicted; in C) the base section of the ingot to which a premix in the form of 18.6 g of aluminum foil containing 10 g of Nb₂O₅ nanoparticles was added after melting the filler, is depicted. The ingots to which the premix was added had a more refined and homogeneous structure than the reference ingot.

Tests were carried out to evaluate the chemical composition of the ingots prepared as described in this example. The results show that there was no significant difference in the levels of Carbon, Manganese, Silicon, and Copper. On the other hand, there was a significant change in the levels of Phosphorus, Sulfur, Aluminum and, more significantly, Niobium.

Fig. 16 shows a graph indicating on the ordinates the % level of the elements P (phosphorus), S (sulfur), Al (aluminum) and Nb (niobium) in four ingots prepared according to the present example. A) represents the reference steel ingot, without the addition of premix; B) represents the steel ingot to which a premix containing 10 g of Nb₂O₅ nanoparticles was added while melting the filler; C) represents the steel ingot to which a premix containing 10 g of Nb₂O₅ nanoparticles was added after melting the filler; D) represents the steel ingot to which a premix in the form of 18.6 g of aluminum foil containing 10 g of Nb₂O₅ nanoparticles was added after melting the filler.

Micrographic analysis of the microstructure of the ingots in three regions along their length demonstrated that, in terms of constituents, the microstructure was similar in all ingots, being composed of ferrite and pearlite. On the other hand, the morphology and particle size of the constituents were visibly distinct.

### Example 7 - Premix comprising Ferroniobium Nanoparticles and its incorporation into Steel.

This embodiment of the invention highlights some of the technical effects related to the use of the premix of the invention in order to: (i) prepare steel ingots with improved properties, thus avoiding the formation of shrinkages and large pores; (ii) prepare steel ingots with a more refined and homogeneous structure; and (iii) prepare steel ingots with a modified chemical profile.

In this embodiment, steel ingots were prepared by melting ASTM A36 steel, with or without the incorporation of the premix containing nanoparticles.

In the present example, 50-kg steel ingots were obtained by melting ASTM 36 steel, with or without the addition of a premix comprising 50 g of Ferroniobium-Tantalum nanoparticles, with particle size distribution d₁₀ = 2.29 µm, d₅₀ = 5.62 µm, d₉₀ = 9.94 µm.

Fig. 17 shows the appearance of the central region sectioned along the length of the ingots without metallographic preparation. In A) the reference ingot, free of premix, is depicted; in B) the ingot to which a premix containing 10 g of FeNb nanoparticles was added after melting the filler, is depicted. Pores and voids were observed only in the reference ingot without the addition of premix. The ingot to which the premix was added did not exhibit voids or pores at any point of the ingot.

Fig. 18 shows photos of base sections of the ingots after metallographic attack in order to evaluate the gross melting structure. In A) the base section of the reference ingot, without the addition of premix, is depicted; in B) the base section of the ingot to which a premix containing 10 g of FeNb nanoparticles was added after melting the filler, is depicted. The ingot to which the premix was added had a more refined and homogeneous structure than the reference ingot.

Tests were carried out to evaluate the chemical composition of the ingots prepared as described in this example. The results show that there was no significant difference in the levels of Carbon, Manganese, Silicon, and Copper. On the other hand, there was a significant change in the levels of Phosphorus, Sulfur, Aluminum and, more significantly, Niobium.

Fig. 19 shows a graph indicating on the ordinates the % level of the elements P (Phosphorus), S (Sulfur), Al (Aluminum) and Nb (Niobium) in two ingots prepared according to the present example. A) represents the reference steel ingot, without the addition of premix; B) represents the steel ingot to which a premix containing 10g of FeNb nanoparticles was added after melting the filler.

### Example 8 - Aluminum ingots with increased hardness by using a premix containing Niobium pentoxide nanoparticles

In this example, 20-kg aluminum ingots were obtained by melting SAE 305 alloy, with or without the addition of 20 g of a premix comprising Niobium pentoxide nanoparticles, with particle size distribution d₁₀ = 0.16 µm, d₅₀ = 0.35 µm, d₉₀ = 0.78 µm.

The hardness values were evaluated in 3 sections of ingots on which metallographic analyses were carried out, including the mean value. The hardness impressions were randomly carried out at 10 points on each ingot, using a 1 kgf load on the Vickers scale. Significant differences in global hardness were evidenced, as showed by statistical analyses (p-value below α).

The incorporation of the premix containing 10 g of niobium pentoxide resulted in a 5.1% increase in hardness, when compared to the reference aluminum ingot, without the incorporation of the premix.

On the other hand, the incorporation of the premix of the invention did not impair other mechanical properties, which is surprising in itself. The mechanical properties and the ductility of the tensile test specimens of the aluminum ingots were not significantly different when comparing the reference ingot to that to which the premix was added. The strength point, yield point, and elongation point properties were also not significantly different.

### Example 9 - Aluminum ingots with increased hardness by using premix containing Ferroniobium nanoparticles

In this example, 20-kg aluminum ingots were obtained by melting SAE 305 alloy, with or without the addition of 20 g of a premix comprising Ferroniobium nanoparticles, with particle size distribution d₁₀ = 2.29 µm, d₅₀ = 5.62 µm, d₉₀ = 9.94 µm.

The hardness values were evaluated in 3 sections of ingots on which metallographic analyses were carried out, including the mean value. The hardness impressions were randomly carried out at 10 points on each ingot, using a 1 kgf load on the Vickers scale. Significant differences in global hardness were evidenced, as showed by statistical analyses (p-value below α).

The incorporation of the premix containing 10 g of Ferroniobium resulted in a 6.1% increase in hardness, when compared to the reference aluminum ingot, without the incorporation of the premix.

Once again, the incorporation of the premix of the invention did not impair other mechanical properties, which is surprising in itself. The mechanical properties and the ductility of the tensile test specimens of the aluminum ingots were not significantly different when comparing the reference ingot to that to which the premix was added. The strength point, yield point, and elongation point properties were not significantly different.

### Example 10 - Steel ingots with increased hardness by using a premix containing Niobium pentoxide nanoparticles

This embodiment of the invention highlights some of the technical effects related to the use of the premix of the invention in order to: (i) prepare steel with increased hardness by incorporating the premix; (ii) prepare steel with increased hardness without thereby reducing ductility, which would be expected under normal conditions. This surprising increase in hardness without decreasing ductility is a notable technical effect of the premix of the invention.

In this embodiment, steel ingots were prepared by melting ASTM A36 steel, with or without the incorporation of the premix containing nanoparticles.

In the present example, 50-kg steel ingots were obtained by melting ASTM 36 steel, with or without the addition of a premix comprising 50g of Niobium pentoxide nanoparticles, with particle size distribution d₁₀ = 0.16 µm, d₅₀ = 0.35 µm, d₉₀ = 0.78 µm.

The hardness tests were carried out on the same sections of the steel ingots on which the metallographic analyses of Example 3 were carried out. The hardness impressions were random, totaling 10 indentations on each sample by applying a load of 1 kgf on the Vickers scale.

Fig. 20 shows the hardness results on the Vickers scale (HV1kgf) on the ordinates, for the base (1), center (2), and top (3) sections of steel ingots, wherein A) is the reference ingot, without the addition of premix; B) is the ingot to which a premix containing 10 g of Nb₂O₅ nanoparticles was added after melting the filler; C) is the ingot to which a premix in the form of 18.6 g of aluminum foil containing 10 g of Nb₂O₅ nanoparticles was added after melting the filler.

The results show that: the ingot to which a premix containing 10 g of Nb₂O₅ nanoparticles was added after melting the filler had an increase of 22.1% in hardness, when compared to the reference steel ingot without the premix incorporation; and the ingot to which a premix in the form of 18.6 g of aluminum foil containing 10 g of Nb₂O₅ nanoparticles was added after melting the filler, had an increase of 107.2% in hardness, when compared to the reference steel ingot without the premix incorporation.

The analysis of variance (ANOVA), for a significance level of 95% (α = 5%) indicated that the p-value for the yield point and the strength point was lower than α, that is, it confirms the difference between the yield point and the strength point means for the ingots to which the premix was added in both conditions (the ingot to which a premix containing 10 g of Nb₂O₅ nanoparticles was added after melting the filler; and the ingot to which a premix in the form of 18.6 g of aluminum foil containing 10 g of Nb₂O₅ nanoparticles was added after melting the filler).

On the other hand, the ductility of the tensile test specimens of the steel ingots was not significantly different when comparing the reference ingot to those to which the premix was added. This surprising increase in hardness and mechanical properties, without decreasing ductility, is a notable technical effect of the premix of the invention.

It is also important to highlight that the results are surprising even when considering the incorporation of particles in micrometric range, further evidencing the technical effect achieved by the premix and the process developed in the present invention.

### Example 11 - Steel ingots with increased hardness by using premix containing Ferroniobium nanoparticles

This embodiment of the invention highlights some of the technical effects related to the use of the premix of the invention in order to: (i) prepare steel with increased hardness by incorporating the premix; (ii) prepare steel with increased hardness without thereby reducing ductility, which would be expected under normal conditions. This surprising increase in hardness without decreasing ductility is a notable technical effect of the premix of the invention.

In this embodiment, steel ingots were prepared by melting ASTM A36 steel, with or without the incorporation of the premix containing nanoparticles.

In the present example, 50-kg steel ingots were obtained by melting ASTM 36 steel, with or without the addition of a premix comprising 50g of Ferroniobium nanoparticles, with particle size distribution d₁₀ = 2.29 µm, d₅₀ = 5.62 µm, d₉₀ = 9.94 µm.

The hardness tests were carried out on the same sections of the steel ingots on which the metallographic analyses of Example 4 were carried out. The hardness impressions were random, totaling 10 indentations on each sample by applying a load of 1 kgf on the Vickers scale.

Fig. 21 shows the hardness results on the Vickers scale (HV1kgf) on the ordinates, for the base (1), center (2), and top (3) sections of steel ingots, wherein A) is the reference ingot, without the addition of premix; B) is the ingot to which a premix containing 10 g of FeNb nanoparticles was added after melting the filler.

The results show that: the ingot to which a premix containing 10 g of FeNb nanoparticles was added after melting the filler had an increase of 68% in hardness, when compared to the reference steel ingot without the premix incorporation.

The analysis of variance (ANOVA), for a significance level of 95% (α = 5%) indicated that the p-value for the yield point and strength point was lower than α, that is, it confirms the difference between the yield point and the strength point means for the ingots to which the premix containing Ferroniobium was added, with the increase in strength and yield points being more pronounced with the addition of premix containing Ferroniobium than that with the addition of premix containing Niobium pentoxide.

On the other hand, the ductility of the tensile test specimens of the steel ingots was not significantly different when comparing the reference ingot to those to which the premix was added. This surprising increase in hardness and mechanical properties, without decreasing ductility, is a notable technical effect of the premix of the invention.

Those skilled in the art will appreciate the knowledge disclosed herein and will be able to reproduce the invention in the disclosed embodiments and in other variants and alternatives thereof, encompassed by the scope of the following claims.

## Claims

1. Premix containing nanoparticles, **characterized in that** it comprises
- a carrier; and
- nanoparticles in the particle size range of nanometers composed of metals, transition metals, rare earths, oxides thereof, or combinations thereof.

2. Premix of claim 1, **characterized in that** the mass ratio of nanoparticles and carrier is in the range of 99:1 to 50:50.

3. Premix of claim 1, **characterized in that** said nanoparticles have a particle size distribution d₁₀ from 0.16 µm to 2.29 µm, d₅₀ from 0.35 µm to 5.62 µm, and d₉₀ from 0.78 µm to 9.94 µm.

4. Premix of claim 1, **characterized in that** said nanoparticles are composed of Niobium oxide, Ferroniobium or combinations thereof.

5. Premix of claim 4, **characterized in that** said Niobium oxide is Niobium pentoxide (Nb₂O₅), Niobium dioxide (NbO₂), Niobium oxide (NbO), or combinations thereof.

6. Premix of claim 1, **characterized in that** said carrier is selected from a capsule, sheet, container or composite composed of metallic, ceramic, vitreous material, hydrocarbons, fatty acids, waxes, processing additives, polymeric material, composite material, or combinations thereof.

7. Premix of claim 6, **characterized in that**:
- said metallic material is aluminum or copper;
- said hydrocarbon is paraffin;
- said fatty acids are oleic acid, palmitic acid, erucic acid;
- said wax is beeswax or carnauba wax;
- said processing additive is sodium stearate or zinc stearate; and/or
- said polymeric material is thermoplastic polymer.

8. Use of a premix containing a carrier and nanoparticles of metals, transition metals, rare earths, oxides thereof, or combinations thereof **characterized in that** it is for preparing materials with improved mechanical properties.

9. Use of claim 8, **characterized in that** said materials are selected from: metals, metallic alloys, ceramics, glasses, polymers, composites, or combinations thereof.

10. Use of claim 9, **characterized in that** said premix contains niobium nanoparticles and said material with improved mechanical properties is steel.

11. Use of claim 9, **characterized in that** said premix contains niobium nanoparticles and said material with improved mechanical properties is aluminum.

12. Process for incorporating nanoparticles into matrix material, **characterized in that** it comprises:
- a step of administering the premix as defined in claim 1 to a matrix material;
- at least one subsequent dispersion and/or *in situ* reaction step between the components of said premix and said matrix material;
wherein said matrix material is selected from metals, reinforced/functionalized metals, metallic alloys, ceramics, glasses, polymers, composites, or combinations thereof.

13. Process of claim 12, **characterized in that** said matrix material is selected from metals, reinforced/functionalized metals, metallic alloys, or combinations thereof.

14. Process of claim 13, **characterized in that** the step of administering the premix is carried out in molten phases of said metal, reinforced/functionalized metal or metallic alloy.

15. Process of claim 14, **characterized in that** said metal, reinforced/functionalized metal or metallic alloy comprises steel or aluminum.

16. Metal, **characterized in that** it has improved mechanical properties comprising nanoparticles of metals, transition metals, rare earths, oxides thereof, or combinations thereof.

17. Metal of claim 16, **characterized in that** said metal is improved steel or aluminum.

18. Metal of claim 17, **characterized in that**:
- said steel has an increase in hardness of at least 20% compared to reference steel; or
- said aluminum has an increase in hardness of at least 5% compared to reference aluminum,
wherein said improved metal has the same ductility, and strength, yield and/or elongation points, when compared to the corresponding conventional metal.

19. Metal of claim 17, **characterized in that**:
- said steel and/or aluminum has a Vickers hardness of up to 380 HV in 1 kgf;
wherein said improved metal has the same ductility, and strength, yield and/or elongation points, when compared to the corresponding conventional metal.

20. Metal of claim 16, **characterized in that** the metal:
- is free of or has a reduced amount of shrinkages and solidification voids; and/or
- has a refined and homogeneous structure; and/or
- has modified chemical profile.
